# EUROPEAN PATENT SPECIFICATION

(11) **EP 1 959 658 B1**
(45) Date of publication and mention of the grant of the patent: **23.01.2013**
(21) Application number: 07123382.9
(22) Date of filing: 17.12.2007
(51) Int. Cl.: H04M 3/533

(54) **Providing audible presence status information of a voice mail sender to the recipient when retrieving the message**
Bereitstellung von akustischer Präsenzzustand-Information eines Sprachnachrichten-Senders zu einem Empfänger wenn dieser die Nachricht abhört
Fourniture d'informations sonores du destinataire d'un message vocale sur l'état de présence de l'expéditeur du message lors de l'accès à ce message

(30) Priority: 14.02.2007 US 674793
(43) Date of publication of application: 20.08.2008
(73) Proprietor: Mitel Networks Corporation, Ottawa, Ontario K2K 2W7 (CA)
(72) Inventor: Trinh, Trung, Ontario K2G 0Z5 (CA)
(74) Representative: Derry, Paul Stefan

(56) References cited:
- US-A1- 2002 076 010
- ROSENBERG J ET AL: "draft-rosenberg-sip-pip-00.txt: SIP For Presence", IETF INTERNET DRAFT, XX, XX, 13 November 1998 (1998-11-13), pages 1-22, XP002325320,

## Description

### FIELD OF THE INVENTION

The present invention relates to facilitation of effective communications using presence information in voice communication applications.

### BACKGROUND OF THE INVENTION

Presence services are an emerging technology that provide information of users availability and capabilities. Such presence services are primarily used for providing availability information of one or more users to another user of a system. This availability information includes an indication of availability or willingness of the user to engage in immediate communication. For example, through visual monitoring of desktop computer applications or smart telephony device applications, a user is provided with availability information of another user, prior to making a telephone call.

Existing presence services rely on desktop presence-enabled applications or smart telephony device presence-enabled applications for the provision of availability information of a user. In the absence of such desktop presence-enabled applications or smart telephony device presence-enabled applications, presence services are not possible. Non-knowledge workers or workers that do not have any presence enabler application for determining presence are not provided with any presence information.

Such presence services suffer further inherent disadvantages in that presence information is not provided at a convenient time and in a convenient manner when a user is engaged in communication-related activities. For example, a call-back option is commonly provided when a user is engaged in a voice mail session, allowing the user to conveniently place a call to a voice mail sender. Alternatively, a user that exits a voice mail session, may wish to make a phone call immediately upon completion of the voice mail session. In such instances, current presence information is not available to the user. Thus, such telephone calls are made without knowledge of availability of the voice mail sender, commonly resulting in the caller being connected to a voice mail system.

Even though US 2002/0076010 discloses a voice mail system providing presence information of the voice mail sender, this document does not address the problem of how to enhance the call-back.

Improvements in presence services for providing presence-rented information in the absence of desktop presence-enabled applications or smart telephony device presence-enabled applications are therefore desirable.

### SUMMARY OF THE INVENTION

The invention is defined by the claims.

External presence information such as availability status, for example, online, offline, busy, or on-the-phone, is conveniently announced to a party who is accessing voice mail messages. Thus, a visual indication of availability is not necessary.

Advantageously, the presence information of a voice mail sender can be provided while a user is accessing voice mail messages, thereby providing information for the user to determine a desired action to take in response to receipt of the voice mail message(s). The invention leverages external presence information such as status including, for example, online, offline, busy or on-the-phone status and provides an audible indication of such to a user who is accessing voice mail.

### BRIEF DESCRIPTION OF THE DRAWINGS

Embodiments of the present invention will now be described, by way of example only, with reference to the attached Figures, wherein:

Figure 1 is a simplified representation of a communication system for implementing a method for facilitating communication using presence services, according to one embodiment of the present invention;

Figure 2 is a flowchart of a method for facilitating communication using presence services according to an embodiment; and

Figure 3 is a simplified representation of a communication system for implementing a method for facilitating communication using presence services according to another embodiment of the present invention.

### DETAILED DESCRIPTION OF THE INVENTION

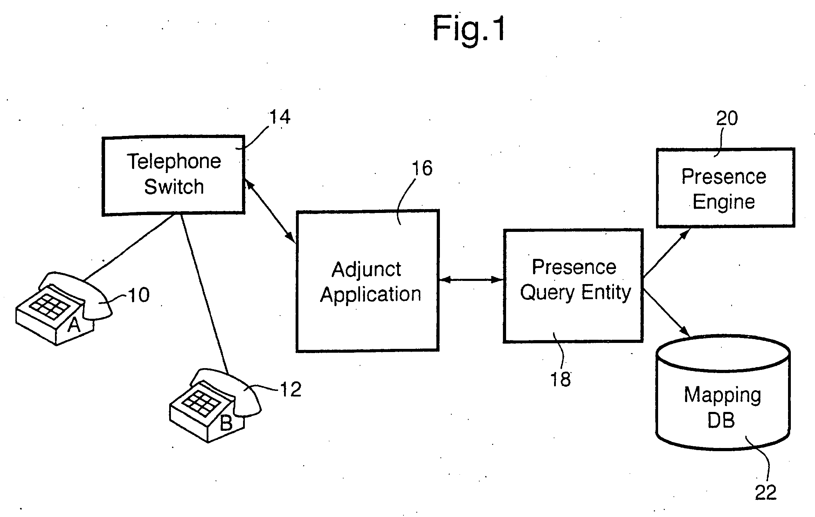

Reference is first made to Figure 1 to describe a communication system for implementing a method for facilitating communication using presence services, according to an embodiment. As shown, a first telephone device 10 of a first user and a second telephone device 12 of a second user are both connected to a telephony switch 14 that is responsible for telephony connections between the first telephone device 10 and the second telephone device 12. The telephone switch 14 is connected to an adjunct application server 16 which is a voice mail server. In turn, the adjunct application server 16 is connected to a presence query task 18 that receives presence queries from the adjunct application server 16 and provides responses in the form of audible presence status information to the adjunct application server 16, The presence query status task 18 is connected to a presence engine 20 that provides presence status information to the presence query task 18, for users, including presence status information for the first user and for the second user. It will be appreciated by those skilled in the art that the presence engine 20 provides presence information by monitoring devices and applications to determine a user's presence. A mapping database 22 is also connected to the presence query task 18 for mapping the presence status information provided by the presence engine 20, to audible presence status information in the form of an audible indication or announcement. It will be appreciated that the functions provided by the adjunct application server 16, the presence query task 18, and the mapping database 22 can be embodied in the same device.

For the purpose of simplicity, only two telephone devices, the first telephone device 10 and the second telephone device 12, are shown. It will be appreciated that many other telephone devices can be connected to the telephony switch 14. It will also be appreciated that the telephony switch 14 can be any switch that handles connections between telephone devices and that the telephony switch 14 and the adjunct application server 16 can be embodied in a single unit such as, for example, a PBX. As indicated above, figure 1 is a functional representation and it will be appreciated that the presence query task 18 and the mapping database 22 can be embodied in the same device.

For the purpose of the present example, the first telephone device 10 is a desk telephone connected to the telephony switch 14. Similarly, the second telephone device 12 is a desk telephone connected to the telephony switch 14.

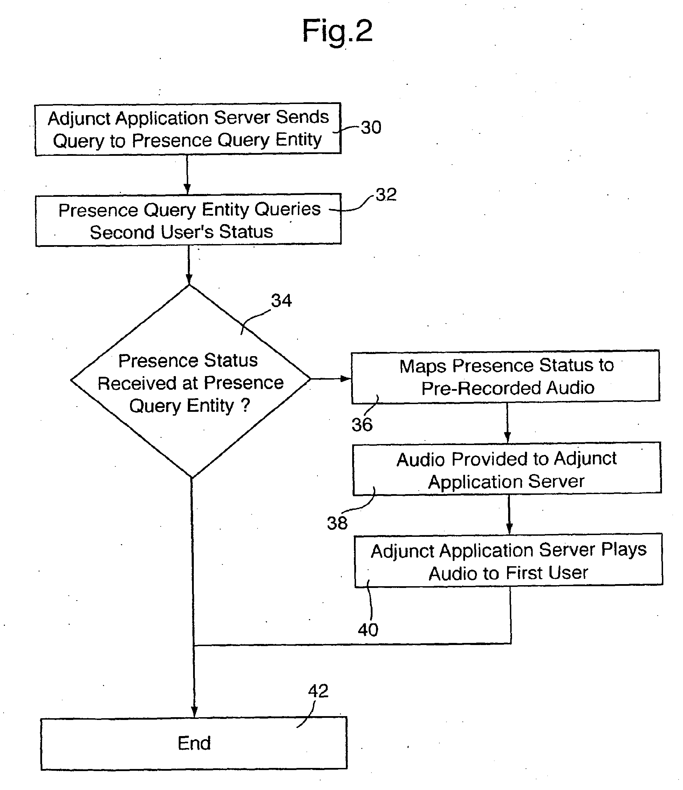

Referring now to Figure 2, there is shown a flow chart of a method for facilitating communication using presence services. The first user employs the use of the adjunct application server 16 during telephony operations. At step 30, the adjunct application server 16 sends a query to the presence query task 18. The query includes an identifier such as a telephone number of a uniform resource identifier (URI) of the second telephone device 12 of the second user. At step 32, the presence query task 18 uses the identifier of the second telephone device 12 to query the second user's presence status from the presence engine 20. As indicated above, the presence engine 20 provides presence information by monitoring devices and applications to determine a user's presence.

If a presence status is received at the presence query task 18 from the presence engine 20, then the presence query task 18 searches the mapping database 22 to map the presence status received at step 34 to an appropriate audible presence status notification such as a tone tone pattern or a pre-recorded audible announcement at step 36. The audible presence status notification is then forwarded to the adjunct application server 16 at step 38 and is played by the adjunct application server 16 to the first telephone device 10 at step 40. In addition to pre-recorded audio announcements based on system-defined presence states such as on-line, off-line, etc., custom presence status indications can be defined and set by individual users. The presence service ends at step 42. As shown in Figure 2, if there is no presence status available for the second user or the method times out while waiting for the presence status, and therefore no presence status is received at step 34, the presence service ends at step 42.

To assist in the explanation of the method for facilitating communication using presence services, the method is now described by way of two examples with reference to the foregoing discussion.

For the purpose of the first example outside the scope of the claims, the adjunct application server 16 is an auto-attendant application. According to the present example, the first user wishes to talk to the second user. The first user calls and is connected to the telephony switch's auto-attendant application (adjunct application server 16), The first user is then presented with an option to input a number to call another user (the second user), The first user then enters the telephone number of the second telephone device 12 to call the second user, using a keypad on the first telephone device 10 and the number entered is validated by the adjunct application server 16.

Next, the adjunct application server 16 sends a query to the presence query task 18 and, as described above, the query includes the identifier of the second telephone device 12 (step 30). As indicated above, the identifier can be a telephone number or a URI, for example. The presence query task 18 uses the identifier of the second telephone device 12 to query the second user's presence status from the presence engine 20. If a presence status is received at the presence query task 18 from the presence engine 20, then the presence query task 18 searches the mapping database 22 to map the presence status received at step 34 to an appropriate pre-recorded audible presence status announcement at step 36. The content of the pre-recorded audible presence status announcement is then forwarded to the adjunct application server 16 at step 38 and is played by the adjunct application server 16 to the first telephone device 10 at step 40. Alternatively, a pointer to the location of the content of the pre-recorded audible presence status announcement is forwarded to the adjunct application server 16 at step 38 and the adjunct application server 16 uses the pointer to locate and play the pre-recarded audible presence status announcement to the first telephone device 10 at step 40. Thus, after entering the phone number for the second telephone device 12, the pre-recorded audible presence status announcement is played to the first user to announce the presence status of the second user. For example, the announcement can indicate that the second user is offline, online, busy or on-the-phone, prior to transferring (causing the second telephone device 12 to ring). Based on the presence status of the second user, options for call handling can be provided to the first user. For example, in the event that the second user is busy, options are provided to the first user to connect to an alternate number, such as a secretary, at another telephone device (not shown in Figure 1) or to go directly to voice mail to leave a message for the second user.

The presence service ends at step 42. As shown in Figure 2, if there is no presence status available for the second user, the presence query task 18 receives a NIL value from the presence engine 20 or times out and therefore no presence status is received at step 34. The presence service then ends at step 42. It will be appreciated that the functions of the adjunct application server 16 do not end at step 42. Instead, only the presence query task 18 operation ends.

The second example representing an embodiment will now be described to further assist in the explanation of the method for facilitating communication using presence services. The adjunct application server 16 is a voice mail application. According to the present example, the second user previously called the first user and left a message using the voice mail application. In response to a message waiting indication at the first telephone device 10, the first user connects to the voice mail application (adjunct application server 16) to listen to the voice message left by the second user. The first user is presented with an option to play the voice message left by the second user. In response to selection of the option to play the voice message, the adjunct application server 16 sends a query to the presence query task 18 and, as described above, the query includes the phone number of the second telephone device 12 (step 30), In the present example, the first user does not enter the phone number of the second telephone device 12. Instead, the phone number is retrieved from the message information.

The presence query task 18 uses the telephone number of the second telephone device 12 to query the second user's presence status from the presence engine 20. If a presence status is received at the presence query task 18 from the presence engine 20, then the presence query task 18 searches the mapping database 22 to map the presence status received at step 34 to an appropriate pre-recorded audible presence status announcement at step 36. The pre-recorded audible presence status announcement is then forwarded to the adjunct application server 16 at step 38 and is played by the adjunct application server 16 to the first telephone device 10 at step 40. Thus, the pre-recorded audible presence status announcement is played to the first user to announce the presence status of the second user. For example, the announcement can indicate that the second user is online, offline, busy, on-the-phone or any other suitable announcement.

The presence service ends at step 42. As shown in Figure 2, if there is no presence status available for the second user, the presence query task 18 receives a NIL value from the presence engine 20 and therefore no presence status is received at step 34. The presence service then ends at step 42. Again, it will be appreciated that the functions of the adjunct application server 16 do not end at step 42. Instead, only the presence query task 18 operation ends.

The first user is therefore provided with the pre-recorded announcement prior to hearing the telephone message. For example, the message can be introduced as "Message 1, from B. Taylor on January 31, status online". The first user can then determine whether or not to call the second user back based on the presence status provided. Alternatively, the first user is provided with the pre-recorded announcement after the voice message is played.

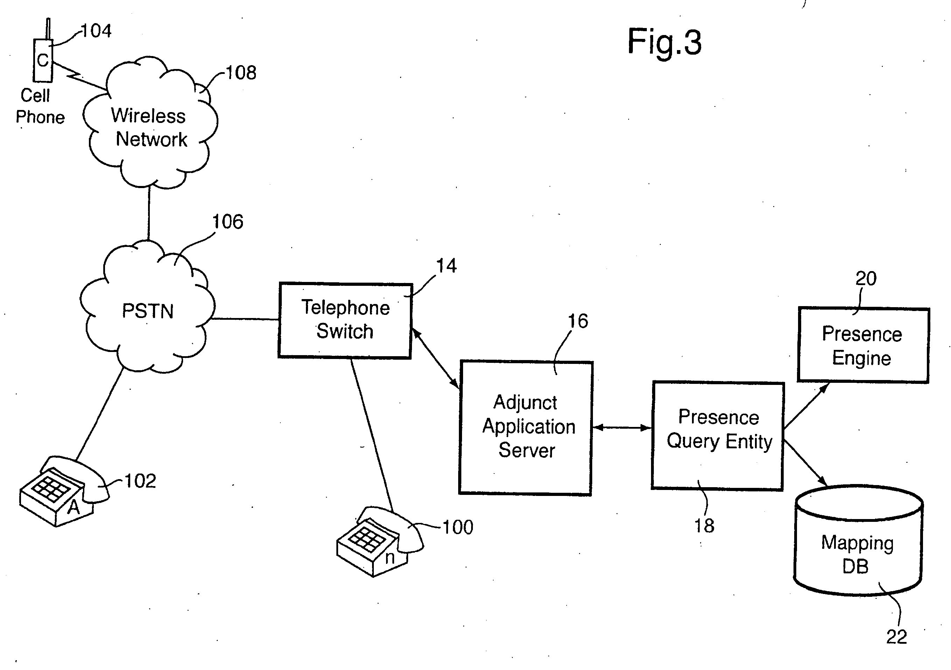

Reference is now made to Figure 3 to describe a communication system for implementing a method for facilitating communication using presence services according to an embodiment of the present invention.

According to the present exemplary embodiment, an internal telephone device 100 of an internal user is connected to a telephony switch 14 that is responsible for telephony connections between the internal telephone device 100 and other telephony devices. The telephone switch 14 is connected to an adjunct application server 16 which is a voice mail server. In turn, the adjunct application server 16 is connected to a present query task 18 that receives presence queries from the adjunct application server 16 and provides responses in the form of audible presence status information to the adjunct application server 16. The presence query task 18 is connected to a presence engine 20 that provides presence status information to the presence query task 18, for users, including presence status information for the internal telephone device user. It will be appreciated by those skilled in the art that the presence engine 20 provides presence information by monitoring the internal telephone device and applications to determine the internal user's presence. A mapping database 22 is also connected to the presence query task 18 for mapping the presence status information in the form of an audible indicating or announcement. It will be appreciated that the functions provided by the adjunct application server 16, the presence query task 18, and the mapping database 22 can be embodied in the same device.

As shown in Figure 3, the telephone switch 14 is also connected to a public switched telephone network (PSTN) which is connected to an external telephone device 102 of an external user. The PSTN is further connected to a wireless network 108 which is connected to a cellular telephone device 104 of a cell phone user. It will be appreciated that the cellular telephone device 104 can be, for example, any device with cellular telephone functionality, including, for example, a cellular phone and a smart phone.

For the purpose of simplicity, only a single telephone device is shown connected directly to the telephone switch 14. Similarly only a single telephone device is shown connected to the PSTN 106 and a single telephone device is shown connected to the wireless network. It will be appreciated, however, that many other telephone devices can be connected to the PSTN and many other telephone devise can be connected to the wireless network. It will also be appreciated that the telephony switch 14 can be any switch that handles connections between telephone devices and that the telephony switch 14 and the adjunct application server 16 can be embodied in a single unit such as, for example, a PBX. As in the first-described embodiment, Figure 3 is a functional representation and it will be appreciated that the presence query task 18, and the mapping database 22 can be embodied in the same device and can be part of a PBX, for example.

Referring again to Figure 2, the external user or the cell telephone user can employ the use of the adjunct application server 16 during telephony operations. At step 30, the adjunct application server 16 sends a query to the presence query task 18. The query includes an identifier such as a telephone number or a uniform resource identifier (URI) of the internal telephone device 100 of the internal user. At step 32, the presence query task 18 uses the identifier of the internal telephone device 100 to query the internal user's presence status from the presence engine 20. As indicated above, the presence engine 20 provides presence information by monitoring devices and applications to determine the internal user's presence.

If a presence status is received at the presence query task 18 from the presence engine 20, then the presence query task 18 searches the mapping database 22 to map the presence status received at step 34 to an appropriate audible presence status notification such as a tone, tone pattern or a pre-recorded audible announcement at step 36. The audible presence status notification is then forwarded to the adjunct application server 16 at step 38 and is played by the adjunct application server 16 to the one of the external telephone device user and the cell telephone device user employing the use of the adjunct application server 16 that resulted in the sending of the query at step 30. The presence service ends at step 42. As shown in Figure 2, if there is no presence status available for the internal user or the method times out while waiting for the presence status and therefore no presence status is received at step 34, the presence service ends at step 42.

Although embodiments of the invention have been described and illustrated in detail, it will be appreciated that various modifications and changes can be made. In the examples described above, the presence query task 18 is connected to a mapping database for mapping a pre-recorded audible presence status notification in the form of an announcement to the presence status received from the presence engine 20. A mapping database can be used instead to map an audible tone or other audible indicator. Thus, rather than playing a pre-recorded announcement, a tone can be provided that the user recognizes as a presence status indication. For example, different tones or different patterns can be used to represent different presence status.

It will also be appreciated that the adjunct application server 16 can include a text-to-speech component for dynamically generating an audible indication of presence status based on a presence status response from the presence query task. This is useful in the case in which a user, such as the first user or the second user in the first-described embodiment, sets their own presence status indications. Also, a test response from the presence query task can be converted into a speech response that is played for the first user. In this case, mapping using the mapping database 22 is unnecessary.

Unified communication capabilities use text-to-speech technology for providing email over the phone. Further, the present invention can also be employed, for example, along with an interactive voice response (IVR) system. Thus, presence information is provided to a user when an option is presented to connect to another person or persons. The user can therefore determine whether or not to choose an option based on presence information. Options for call handling are provided based on the presence status provided in the audible indication. In the event that a user is busy, options can be provided to connect to an alternative number, for example, to a secretary at another telephone device (not shown) or to go directly to voice mail to leave a message for the second user.

Further still, the application can vary the presentation of the presence information that is provided such that the presence information that is provided differs for different users. For example, rules can be established to customize the presence information that is provided based on whether or not an incoming call is from an internal telephone device or an external telephone device, determined by the caller line identification. Similarly, specific presence information can be provided to only certain incoming calls, based on caller line identification. Therefore, an application can vary the presentation of the presence information that is provided such that certain information is provided only to pre-defined callers based on the caller line identification. Thus, the contact information based on the caller line identification is provided and, at step 36, the presence status is mapped to the appropriate pre-recorded audio or tone based on the caller line identification, Alternatively, audio is dynamically generated based on both the presence status and the caller line identification at step 36.

Still further alternatives and modifications may occur to those skilled in the art. All such alternatives and modifications are covered by the present application as long as they are within the scope of the invention as defined by the claims appended hereto.

## Claims

1. A method for facilitating communication between a first user and a second user, the method comprising:
a presence query task (18) receiving contact information associated with a message left by said second user on a voice mail server (16), and
querying a presence engine (20) to determine a presence status of said second user (32), and
providing said presence status to said voicemail server; and
said voicemail server providing the presence status of said second user in the form of an audible indication through a telephony switch to said first user (40), **characterised in that** if the second user is busy, providing options to the first user of connecting to an alternative number or going directly to voice mail to leave a message for the second user.

2. The method according to claim 1, further comprising customizing the audible indication that is provided based on whether an incoming call is from an internal telephone device or an external telephone device.

3. The method according to claim 1 or claim 2, wherein said presence query task and said voice mail server are embodied in a single device.

4. The method according to any of claims 1 to 3, wherein said audible indication comprises a tone or tone pattern.

5. The method according to any of claims 1 to 3, wherein said audible indication comprises a pre-recorded message.

6. The method according to any preceding claim, wherein said providing a presence status of said second user in the form of an audible indication comprises dynamically generating said audible indication of said presence status and forwarding said audible indication to said first user.

7. A system for facilitating communication between a first user and a second user, the system comprising:
a telephone switch (14) for connecting a first user telephony device (10) with a second user telephony device (12);
a voice mail server (16) connected to said telephone switch; and
a presence query task (18) configured to receive contact information associated with a message left by said second user on said voice mail server and to query a presence engine (20) to determine a presence status of said second user and to provide said presence status to a voice mail server;
wherein said voice mail server is configured to provide the presence status of said second user in the form of an audible indication through said telephony switch to said first user, **characterised in that** and if the second user is busy to provide options to the first user of connecting to an alternative number or going directly to voicemail to leave a message for the second user.

8. The system according to claim 7, wherein said presence query task (18) is part of said voicemail server (16).

## Patentansprüche

1. Verfahren zum Erleichtern der Kommunikation zwischen einem ersten Benutzer und einem zweiten Benutzer, wobei das Verfahren umfasst:
einen Präsenzabfragetask (18) der Kontaktinformationen empfängt, die einer Nachricht zugeordnet sind, die von dem zweiten Benutzer auf einem Sprachnachrichtenserver (16) zurückgelassen wurde; und
Abfragen einer Präsenzmaschine (20), um einen Präsenzstatus des zweiten Benutzers (32) zu bestimmen; und
Bereitstellen des Präsenzstatus an den Sprachnachrichtenserver; und
wobei der Sprachnachrichtenserver den Präsenzstatus des zweiten Benutzers in Form einer Audioangabe mittels eines Telefonieschalters an den ersten Benutzer (40) bereitstellt, und **dadurch gekennzeichnet, dass** dann, wenn der zweite Benutzer beschäftigt ist, dem ersten Benutzer Optionen angeboten werden, eine Verbindung mit einer anderen Nummer herzustellen, oder direkt zur Sprachnachricht weiterzugehen, um eine Nachricht für den zweiten Benutzer zurückzulassen.

2. Verfahren nach Anspruch 1, ferner umfassend ein individuelles Anpassen der Audioangabe, die bereitgestellt wird, basierend darauf, ob ein eingehender Anruf von einer internen Telefonvorrichtung oder von einer externen Telefonvorrichtung stammt.

3. Verfahren nach Anspruch 1 oder Anspruch 2, wobei der Präsenzabfragetask und der Sprachnachrichtenserver in einer einzigen Vorrichtung ausgeführt sind.

4. Verfahren nach einem der Ansprüche 1 bis 3, wobei die Audioangabe einen Ton oder ein Tonmuster umfasst.

5. Verfahren nach einem der Ansprüche 1 bis 3, wobei die Audioangabe eine zuvor gespeicherte Nachricht umfasst.

6. Verfahren nach einem der vorhergehenden Ansprüche, wobei das Bereitstellen eines Präsenzstatus des zweiten Benutzers in der Form einer Audioangabe ein dynamisches Generieren der Audioangabe des Präsenzstatus und das Weiterleiten der Audioangabe an den ersten Benutzer umfasst.

7. System zum Erleichtern der Kommunikation zwischen einem ersten Benutzer und einem zweiten Benutzer, wobei das System umfasst:
einen Telefonschalter (14) zum Verbinden einer ersten Benutzertelefonievorrichtung (10) mit einer zweiten Benutzertelefonievorrichtung (12);
einen Sprachnachrichtenserver (16), der mit dem Telefonschalter verbunden ist; und
einen Präsenzabfragetask (18), der dazu ausgelegt ist, Kontaktinformationen zu empfangen, die einer Nachricht zugeordnet sind, welche von dem zweiten Benutzer auf dem Sprachnachrichtenserver hinterlassen wurden, und eine Präsenzmaschine (20) abzufragen, um einen Präsenzstatus des zweiten Benutzers zu bestimmen, und den Präsenzstatus an den Sprachnachrichtenserver bereitzustellen;
wobei der Sprachnachrichtenserver dazu ausgelegt ist, den Präsenzstatus des zweiten Benutzers in der Form einer Audioangabe durch den Telefonieschalter an den ersten Benutzer bereitzustellen, **dadurch gekennzeichnet, dass** dann, wenn der zweite Benutzer beschäftigt ist, dem ersten Benutzer die Optionen angeboten werden, eine Verbindung mit einer anderen Nummer herzustellen, oder direkt zu den Sprachnachrichten weiterzugehen, um eine Nachricht für den zweiten Benutzer zurückzulassen.

8. System nach Anspruch 7, wobei der Präsenzabfragetask (18) Teil des Sprachnachrichtenservers (16) ist.

## Revendications

1. Procédé pour faciliter une communication entre un premier utilisateur et un second utilisateur, le procédé comprenant :
une tâche d'interrogation de présence (18) recevant des informations de contact associées à un message laissé par ledit second utilisateur sur un serveur de messagerie vocale (16), et
l'interrogation d'un moteur de présence (20) pour déterminer un état de présence dudit second utilisateur (32), et
la fourniture dudit état de présence audit serveur de messagerie vocale ; et
ledit serveur de messagerie vocale fournissant l'état de présence dudit second utilisateur sous la forme d'une indication audible à travers un commutateur de téléphonie audit premier utilisateur (40), et **caractérisé par**, si le second utilisateur est occupé, la fourniture d'options au premier utilisateur pour se connecter à un numéro alternatif ou aller directement sur la messagerie vocale pour laisser un message pour le second utilisateur.

2. Procédé selon la revendication 1, comprenant en outre la personnalisation de l'indication audible qui est fournie sur la base du fait qu'un appel entrant provienne d'un appareil téléphonique interne ou d'un appareil téléphonique externe.

3. Procédé selon la revendication 1 ou la revendication 2, dans lequel ladite tâche d'interrogation de présence et ledit serveur de messagerie vocale sont mis en oeuvre dans un unique appareil.

4. Procédé selon l'une quelconque des revendications 1 à 3, dans lequel ladite indication audible comprend une tonalité ou une séquence de tonalités.

5. Procédé selon l'une quelconque des revendications 1 à 3, dans lequel ladite indication audible comprend un message préenregistré.

6. Procédé selon l'une quelconque des revendications précédentes, dans lequel ladite fourniture d'un état de présence dudit second utilisateur sous la forme d'une indication audible comprend la génération dynamique de ladite indication audible dudit état de présence et la transmission de ladite indication audible audit premier utilisateur.

7. Système pour faciliter une communication entre un premier utilisateur et un second utilisateur, le système comprenant :
un commutateur de téléphonie (14) pour connecter un appareil téléphonique du premier utilisateur (10) avec un appareil téléphonique du second utilisateur (12),
un serveur de messagerie vocale (16) connecté audit commutateur de téléphonie ; et
une tâche d'interrogation de présence (18) configurée pour recevoir des informations de contact associées à un message laissé par ledit second utilisateur sur ledit serveur de messagerie vocale et pour interroger un moteur de présence (20) pour déterminer un état de présence dudit second utilisateur et pour fournir ledit état de présence audit serveur de messagerie vocale ;
dans lequel ledit serveur de messagerie vocale est configuré pour fournir l'état de présence dudit second utilisateur sous la forme d'une indication audible à travers ledit commutateur de téléphonie audit premier utilisateur, **caractérisé par**, si le second utilisateur est occupé, la fourniture d'options au premier utilisateur pour se connecter à un numéro alternatif ou aller directement sur la messagerie vocale pour laisser un message pour le second utilisateur.

8. Système selon la revendication 7, dans lequel ladite tâche d'interrogation de présence (18) fait partie dudit serveur de messagerie vocale (16).
